# FASCICULE DE BREVET EUROPEEN

(11) **EP 2 832 312 B1**
(45) Date de publication et mention de la délivrance du brevet: **27.04.2016**
(21) Numéro de dépôt: 14178700.2
(22) Date de dépôt: 28.07.2014
(51) Int. Cl.: A61C 19/02, B65D 21/02, B65D 25/06, B65D 25/10, B65D 81/05

(54) **Boite de transport de dispositifs dentaires, tels que des empreintes, protheses et modeles dentaires**
Transportbox für Dentalvorrichtungen, wie Abdrücke, Prothesen und Zahnmodelle
Transport box for dental devices, such as impressions, dental prostheses and models

(30) Priorité: 29.07.2013 FR 1357486
(43) Date de publication de la demande: 04.02.2015
(73) Titulaire: Bernard, Jean-Jacques Michel, 01210 Ferney-Voltaire (FR)
(72) Inventeur: Bernard, Jean-Jacques Michel, 01210 Ferney-Voltaire (FR)
(74) Mandataire: Myon, Gérard Jean-Pierre

(56) Documents cités:
- EP-A1- 0 457 736
- AT-B- 392 584
- DE-A1- 10 159 382
- DE-U1- 9 108 813
- US-A- 3 936 937

## Description

La présente invention concerne une boite de transport de dispositifs dentaires, tels que des empreintes, prothèses et modèles dentaires. Le domaine de l'invention est celui du transport de dispositifs dentaires fragiles et/ou déformables plastiquement, nécessitant une protection contre des chocs ou compressions accidentels lors de leur transport.

De manière classique, une empreinte dentaire est réalisée en plusieurs étapes. Le chirurgien-dentiste choisit d'abord un porte-empreinte complet ou partiel, en fonction de la taille des maxillaires et de la denture du patient. Le porte-empreinte va être comblé par un matériau qui durcit en quelques minutes, par exemple du plâtre dentaire, de l'alginate du silicone ou autres produits. La mise en bouche peut alors s'effectuer. Le patient reste immobile le temps de la prise du matériau, au terme de laquelle le porte-empreinte contenant l'empreinte des dents et/ou des muqueuses tant du maxillaire que de la mandibule peut être retiré de la cavité buccale. Après retrait du porte-empreinte, le chirurgien-dentiste vérifie la qualité de l'empreinte puis, après désinfection et traitement de celle-ci, l'envoie au laboratoire de prothèses dentaires, par l'intermédiaire de coursiers employés par les laboratoires, par des transporteurs privés, par les services postaux, ou tout autre moyen d'acheminement. A la réception des empreintes, le prothésiste-dentaire fabrique les prothèses correspondantes puis les envoie au chirurgien-dentiste, par les mêmes moyens de transport, sur des modèles réalisés en plâtre pour la plupart d'entre eux, pour l'essayage en bouche et le scellement ou la pose de ces prothèses, accompagnées des porte-empreintes nettoyés. Plusieurs échanges entre le chirurgien-dentiste et le prothésiste peuvent s'avérer nécessaires en fonction de la complexité du travail à accomplir.

En pratique, une empreinte dentaire subit des opérations de transport consistant au moins en un aller-retour entre le cabinet dentaire et le laboratoire de prothèses. De telles opérations sont susceptibles d'endommager ou de déformer plastiquement l'empreinte, notamment en cas de choc ou d'écrasement. Si cela se produit avant la réception de l'empreinte par le prothésiste, la prothèse fabriquée risque d'être mal adaptée à la préparation dentaire du patient. Dans ce cas, une nouvelle empreinte doit être prise sur le patient puis renvoyée au prothésiste, ce qui implique de reconvoquer le patient, ainsi que de nouvelles opérations de transport, une perte de matériau, de temps pour tous et donc d'argent.

EP-A-2 407 344, US-A-2010 200 349 et GB-A-945 466 décrivent différentes boites de transport d'objets. Ces boites comportent des éléments gonflables prévus pour enserrer et ainsi maintenir en place les objets dans un espace de transport. Ces boites ne sont pas entièrement satisfaisantes. Les systèmes de gonflage peuvent être coûteux, encombrants et la boite est inutilisable s'ils sont endommagés. De plus, les objets peuvent frotter contre les éléments gonflables ou être déformés par la pression exercée par ces éléments gonflables, de sorte que ces boites ne sont pas adaptées à tous les types d'objets, tels que les dispositifs dentaires.

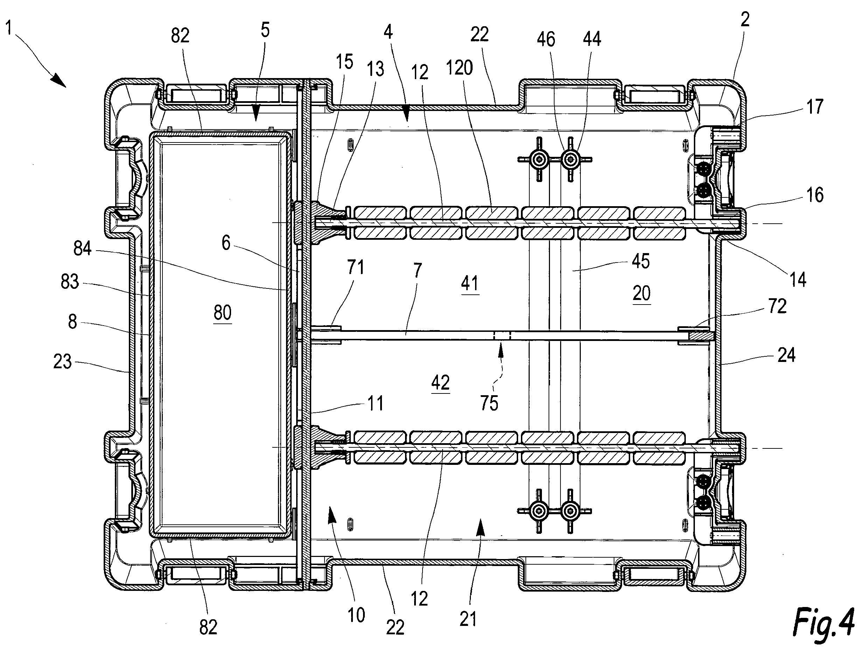

US-A-3 936 937 décrit différents modes de réalisation d'une boite de transport de dispositifs dentaires. La boite comprend un corps et un couvercle délimitant un espace de transport. Dans le mode de réalisation de la figure 4, la boite comprend un système de tringlerie prévu pour supporter un pantographe.

Le but de la présente invention est de proposer une boite de transport améliorée, qui soit bien adaptée aux dispositifs dentaires.

A cet effet, l'invention concerne une boite de transport de dispositifs dentaires, tels que des empreintes, prothèses et modèles dentaires. Cette boite de transport comprend un corps comprenant des parois délimitant un espace de transport ; et un système de tringlerie positionné dans le corps et adapté pour recevoir au moins un support en suspension, le dispositif dentaire accroché à son support étant suspendu dans l'espace de transport, notamment sans contact avec les parois du corps. La boite de transport est caractérisée en ce qu'elle comprend également au moins une entretoise de séparation positionnée sur le système de tringlerie et adaptée, pour séparer deux supports voisins.

Ainsi, l'invention permet de faciliter et sécuriser le transport de dispositifs dentaires, qui peuvent être suspendus au système de tringlerie, sans contact avec les parois du corps. La boite selon l'invention est particulièrement bien adaptée au transport d'objets fragiles et déformables plastiquement, tels que les empreintes dentaires. La boite permet de protéger des parties très vulnérables de l'empreinte dentaire, comme les pivots faisant saillie de l'empreinte et se trouvant ainsi en première ligne pour subir une déformation accidentelle.

Selon d'autres caractéristiques avantageuses de l'invention, prises isolément ou en combinaison :
- La boite de transport comprend un bac amovible positionné dans l'espace de transport, dans un compartiment distinct du système de tringlerie.
- Le bac comprend deux parois latérales aptes à être positionnées sélectivement devant une paroi transparente ou translucide du corps, chacune de ces parois latérales comprenant des moyens de repérage distincts de l'autre paroi latérale, par exemple des couleurs distinctes.
- Le système de tringlerie comprend une tige fixe et au moins une tige mobile articulée sur la tige fixe, de préférence deux tiges mobiles disposées de part et d'autre d'une paroi amovible positionnée dans l'espace de transport.
- La boite de transport comprend au moins un organe de clipsage adapté pour recevoir une extrémité de la tige mobile opposée à l'extrémité articulée sur la tige fixe, de préférence la boite de transport comprend deux organes de clipsage pour chaque tige mobile clipsable dans deux configurations distinctes.
- La ou les entretoises de séparation sont positionnées sur des tiges mobiles appartenant au système de tringlerie.
- La boite de transport comprend un couvercle positionné sur le corps pour la fermeture de l'espace de transport, le couvercle et une paroi inférieure du corps comprenant de préférence des moyens de solidarisation de la boite de transport avec une autre boite de transport lors de leur empilement.
- La boite de transport présente des dimensions adaptées pour être logée dans une boite aux lettres standard, présentant notamment une largeur de 260 mm, une hauteur de 260 mm et une profondeur de 340 mm.
- La boite de transport comprend au moins une lanière disposée au fond de l'espace de transport.
- La boite de transport comprend au moins un organe amortisseur logé dans le corps et/ou dans le couvercle, de préférence au moins contre la paroi inférieure du corps, par exemple un revêtement en mousse ou un élément gonflable.

L'invention sera mieux comprise à la lecture de la description qui va suivre, donnée uniquement à titre d'exemple non limitatif et faite en référence aux dessins annexés sur lesquels :
- la figure 1 est une vue en perspective d'une boite de transport d'objets conforme à l'invention, montrant le dessus et deux côtés de la boite ;
- la figure 2 est une vue en élévation selon la flèche II à la figure 1 ;
- la figure 3 est une coupe selon la ligne III-III à la figure 2 ;
- la figure 4 est une coupe selon la ligne IV-IV à la figure 3 ;
- la figure 5 est une coupe selon la ligne V-V à la figure 2 ; et
- la figure 6 est une coupe analogue à la figure 4, montrant une autre configuration de la boite.

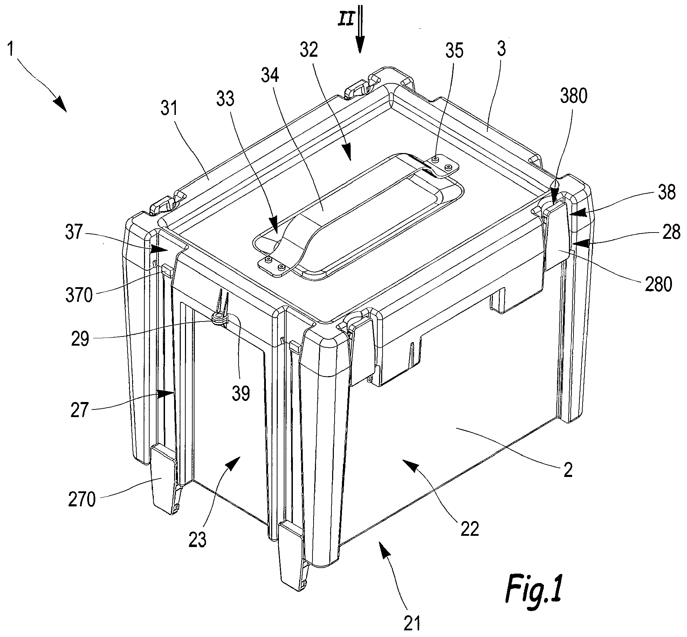

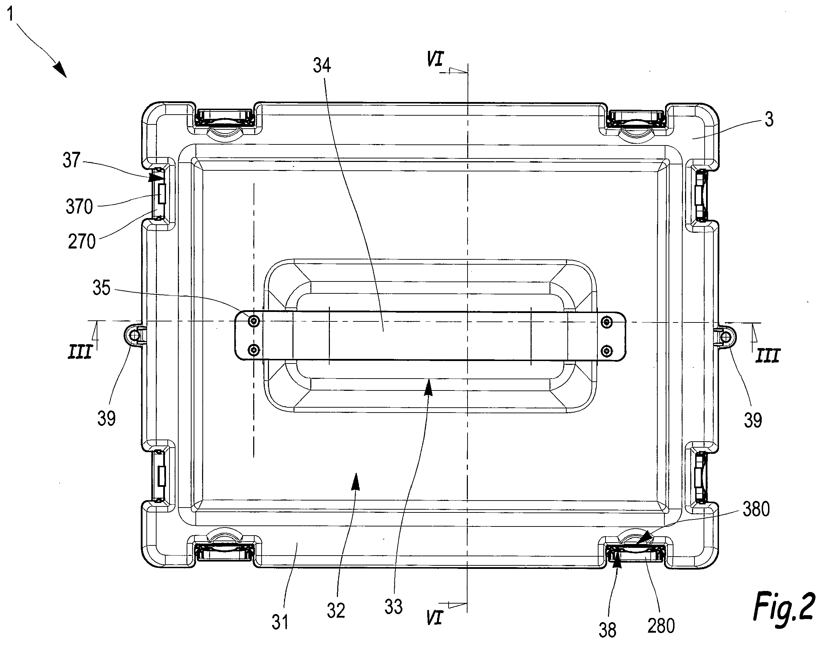

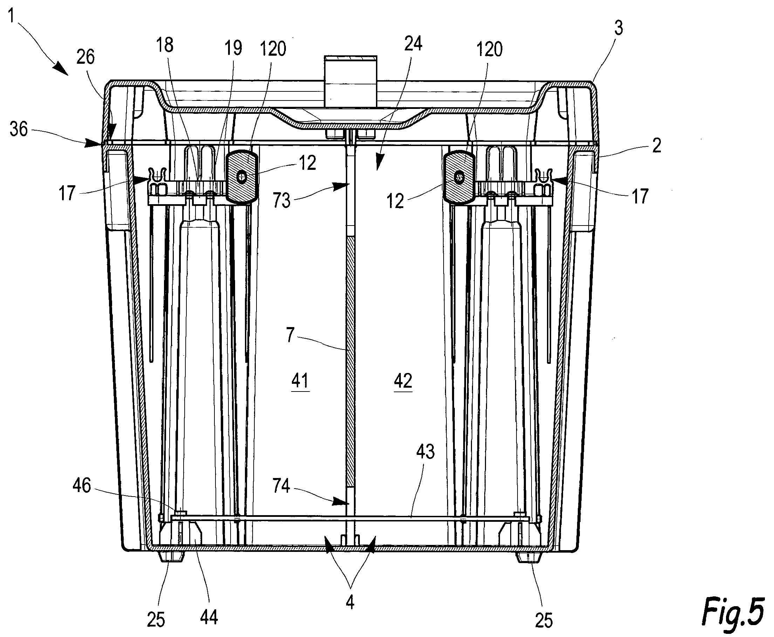

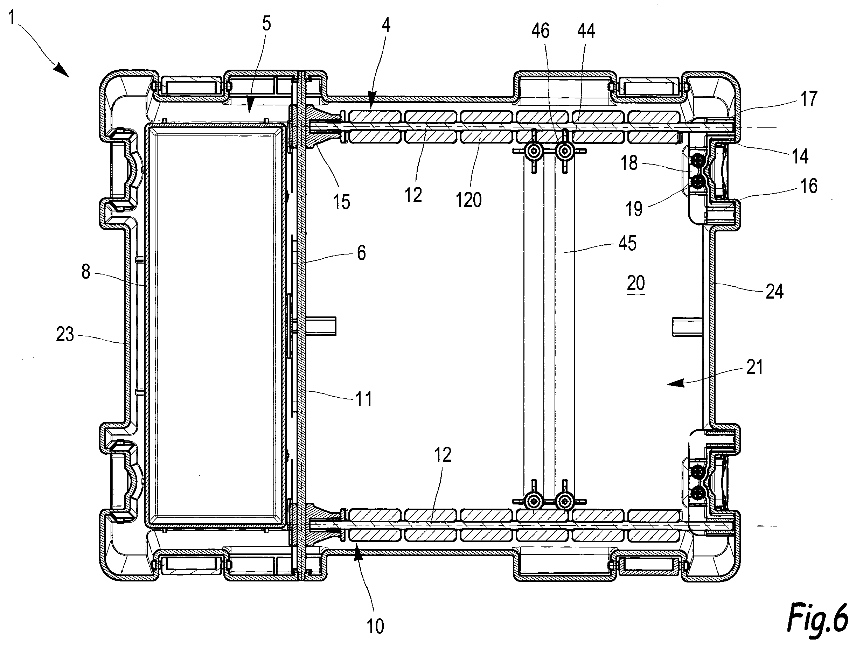

Sur les figures 1 à 6 est représentée une boite de transport 1 conforme à l'invention.

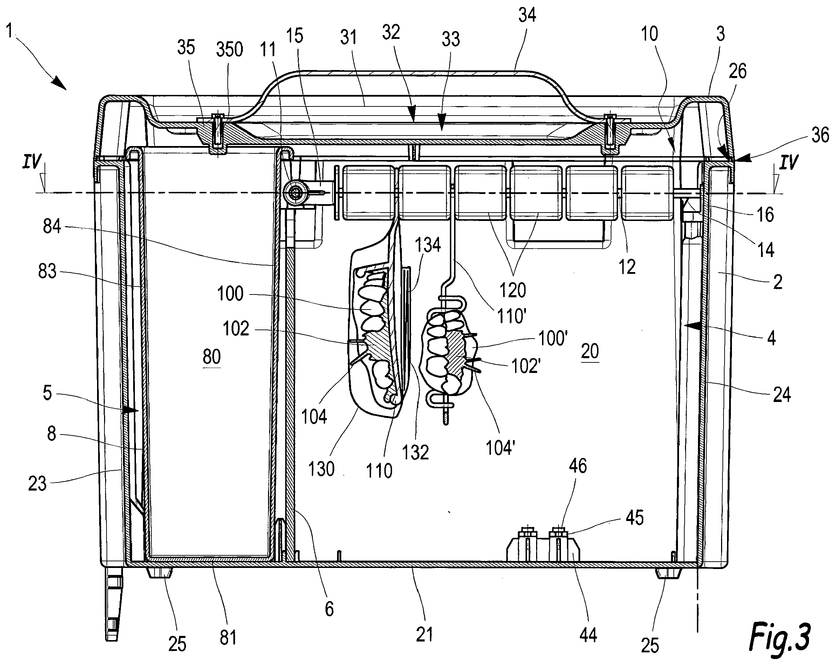

La boite 1 est prévue pour le transport de dispositifs dentaires, telles que les empreintes dentaires 100 et 100', représentées schématiquement et uniquement à la figure 3 dans un but de simplification. Chacune des empreintes 100 et 100' comprend une partie, respectivement 102 ou 102', située dans le plan de coupe de la figure 3, comportant des pivots, respectivement 104 et 104'. En pratique, les pivots 104 ou 104' faisant saillie de l'empreinte 100 ou 100' se trouvent en première ligne pour subir une déformation accidentelle, ce que l'invention vise à éviter.

La boite 1 comprend un corps creux 2 et un couvercle 3 prévu pour coiffer le corps 2. Le corps 2 délimite deux compartiments 4 et 5, séparés par une paroi fixe 6. Sur l'exemple des figures, la paroi 6 est positionnée approximativement aux deux tiers de la longueur du corps 2, avec les dimensions du compartiment 4 qui sont supérieures à celles du compartiment 5. Le compartiment 4 est lui-même divisé en deux sous-compartiments 41 et 42, séparés par une paroi amovible 7. La boite 1 comprend également un bac amovible 8, prévu pour être disposé dans le compartiment 5. La boite 1 comprend également un système de tringlerie 10 disposé dans le corps 2, plus précisément dans le compartiment 4.

Avantageusement, la boite 1 présente des dimensions adaptées pour entrer dans une boite aux lettres standard, définie notamment en France par la norme NF-D-27404 : une largeur de 260 mm, une hauteur de 260 mm et une profondeur de 340 mm. Sur l'exemple des figures, la boite 1 présente une largeur maximale de 240 mm, une hauteur maximale de 225 mm et une longueur maximale de 329 mm.

Le corps 2 délimite un espace intérieur de transport 20, comprenant les compartiments 4 et 5. Le corps 2 comporte un fond ou paroi inférieure 21, deux parois latérales longitudinales 22 et deux parois latérales transversales 23 et 24. Les parois 21, 22, 23 et 24 délimitent l'espace 20, avec la paroi 23 qui borde le compartiment 5 et la paroi 24 qui borde le compartiment 4. Les parois longitudinales 22 présentent des dimensions supérieures aux parois transversales 23 et 24. La paroi 6 s'étend transversalement entre les deux parois longitudinales 22. Sur l'extérieur du corps 2, les parois 22, 23 et 24 peuvent comporter des inscriptions, par exemple des étiquettes, autocollants, impressions, gravures et/ou moulures. Par exemple, la paroi 24 peut recevoir un panneau autocollant comportant des informations permettant d'identifier le propriétaire de la boite 1. La paroi inférieure 21 du corps 2 comporte des pieds 25 prévus pour reposer au sol, dans une boite aux lettres ou sur une table de travail. Les pieds 25 permettent également le positionnement d'une boite 1 sur une autre boite 1. Ainsi, plusieurs boites 1 peuvent être empilées afin de faciliter leur transport. En partie haute, le long des parois 22, 23 et 24, le corps 2 comporte un bord 26 prévu pour recevoir le couvercle 3 en vue de fermer l'espace de transport 20.

Le couvercle 3 comporte une bordure 31 qui s'étend autour d'une paroi supérieure 32 sensiblement plane comportant un décaissement central 33. Les pieds 25 viennent se loger dans les coins intérieurs de la bordure 31 lorsque deux boites 1 sont empilées. La paroi 32 peut comporter des inscriptions, par exemple des étiquettes, autocollants, impressions, gravures et/ou moulures, montrant notamment la marque commerciale de la boite 1. Le couvercle 3 comporte également une poignée 34 qui s'étend par-dessus le décaissement 33, facilitant ainsi sa préhension. La poignée 34 peut comporter des inscriptions par impression, tissage, moulures, découpes ou rajouts. La poignée 34 est formée par une lanière souple fixée à la paroi 32, de part et d'autre du décaissement 33, via des vis de fixation 35 ancrées dans la paroi 32. La poignée 34 est déformable élastiquement et n'est pas prise en compte dans la hauteur maximale de la boite 1. De préférence, les vis 35 sont chacune vissée dans un insert métallique fileté 350 intégré dans la matière du couvercle 3. En partie basse, le long de la bordure 31, le couvercle 3 comporte un bord 36 prévu pour être ajusté contre le bord 26 du corps 2. En alternative ou en complément, le couvercle 3 peut comporter des picots qui viennent s'ajuster dans des orifices complémentaires ménagés dans le corps 2.

La boite 1 comporte des rainures verticales 27+37 formées sur son côté transversal, avec une partie de rainure 27 formée au niveau des parois transversales 23 et 24 du corps 2 et une partie de rainure 37 formée dans la bordure 31 du couvercle 3. Un verrou 270 est monté pivotant en partie basse de la rainure 27, de manière à pouvoir être sélectivement logé dans la rainure 27 ou dépasser en dessous de la paroi inférieure 21 et des pieds 25. Un crochet 370 prévu pour coopérer avec le verrou 270, notamment par clipsage, est disposé dans la rainure 37. Ainsi, lorsque deux boites 1 sont empilées l'une sur l'autre, le verrou 270 supérieur peut venir en prise avec le crochet 370 inférieur afin de fixer rigidement les boites 1 l'une à l'autre. Sur l'exemple des figures, la boite 1 comporte quatre rainures 27+37 et quatre ensembles verrou 270 et crochet 370.

La boite 1 comporte également des rainures verticales 28+38 formées sur son côté longitudinal, avec une partie de rainure 28 formée en partie haute de la paroi longitudinale 22 du corps 2 et une partie de rainure 38 formée dans la bordure 31 du couvercle 3. Un verrou 280 est monté pivotant dans la rainure 28. Un crochet 380 prévu pour coopérer avec le verrou 280, notamment par clipsage, est disposé dans la rainure 38. Ainsi, lorsque le couvercle 3 est positionné sur le corps 2, le verrou 280 peut venir en prise avec le crochet 380 afin de fermer la boite 1 en fixant rigidement le couvercle 3 sur le corps 2. Sur l'exemple des figures, la boite 1 comporte quatre rainures 28+38 et quatre ensembles verrou 280 et crochet 380.

La boite 1 comporte également des oreilles percées 29 et 39 complémentaires, prévues pour recevoir des cadenas de verrouillage du couvercle 3 sur le corps 2. Plus précisément, une oreille 29 est disposée sur chaque paroi 23 et 24 du corps 2, tandis qu'une oreille 39 est disposée sur la bordure 31 en regard de chaque oreille 29, lorsque le couvercle 3 recouvre le corps 2. Ainsi, le corps 2 et le couvercle 3 peuvent être solidarisés à l'aide de deux cadenas disposés dans les paires d'oreilles 29 et 39.

De préférence, le corps 2 de la boite 1 est transparent ou translucide, de manière à pouvoir visualiser l'espace 20 et notamment le bac 8 depuis l'extérieur de la boite 1. En particulier, la paroi 23 est transparente ou translucide pour pouvoir visualiser le bac 8. Le couvercle est généralement opaque. Encore de préférence, le corps 2, le couvercle 3 et le bac 8 sont en matière plastique, par exemple en polypropylène ou polycarbonate. En variante, les éléments constitutifs de la boite 1 peuvent être réalisés en tous matériaux adaptés, par exemple en métal ou d'autres matières plastiques que les exemples ci-dessus.

Le système de tringlerie 10 comprend une tige transversale 11 et deux tiges longitudinales 12, de préférence en métal ou en matière plastique. La tige 11 forme la base du système 10, tandis que les tiges 12 forment des moyens de suspension d'objets, tels que les empreintes 100 et 100'. La tige 11 est montée fixe entre les parois longitudinales 22 du corps 2, à l'aplomb de la paroi fixe 6. Les tiges 12 comportent chacune une première extrémité 13 et une deuxième extrémité 14. La première extrémité 13 est fixée dans un coulisseau 15 monté en liaison pivot glissant sur la tige 11. Chaque tige 12 est articulée en liaison pivot glissant sur la tige 11. Lorsque la paroi amovible 7 est en place, les tiges 12 sont situées de part et d'autre de cette paroi 7, dans l'un des compartiments 41 ou 42. La deuxième extrémité 14 peut être clipsée dans l'un ou l'autre des organes de clipsage 16 ou 17 fixés à la paroi 24 bordant le compartiment 4. Dans chaque compartiment 41 ou 42, l'organe 16 dit intérieur est plus rapproché de la paroi 7, tandis que l'organe 17 dit extérieur est plus rapproché de la paroi 22. Chaque paire d'organes 16 et 17 est solidaire d'une base 18 fixée par des vis 19 au corps 2.

Comme montré à la figure 3, chacune des empreintes 100 et 100' est positionnée sur un porte-empreinte, respectivement 110 et 110', formant un support spécifiquement adapté à sa forme. Le porte-empreinte 110 est du type complet, tandis que le porte-empreinte 110' est du type partiel ou hémi-porte-empreinte. Les porte-empreintes 110 et 110' sont suspendus sur la tige 12, chacun entre deux entretoises de séparation 120. Les entretoises 120 permettent de séparer les porte-empreintes 110, 110' et suivants le long de la tige 12, pour éviter qu'ils s'entrechoquent et endommagent ou déforment les empreintes 100, 100' et suivantes, notamment les pivots 104 et 104'. En d'autres termes, les entretoises 120 permettent de définir un écartement entre deux supports 110 et 110' voisins en suspension et entre deux dispositifs 100 et 100' voisins suspendus à leurs supports 110 et 110'.

Sur l'exemple de la figure 3, l'empreinte 100 et le porte-empreinte 110 sont enveloppés dans un sachet 130 muni d'une poche kangourou 132. Le sachet 130 isole le porte-empreinte 110 et son empreinte 100 des autres empreintes et du reste de la boite 1. La poche 132 permet de conserver un document 134 associé à l'empreinte 100 particulière logée dans le sachet 130, par exemple un bon de travail ou tout autre document facilitant l'identification de cette empreinte 100. L'empreinte 100' et le porte-empreinte 110' peuvent également être enveloppés dans un sachet, non représenté dans un but de simplification. En alternative ou en complément des documents 134, les entretoises 120 peuvent être munies de moyens d'identification de chacune des empreintes 100, 100' et suivantes, par exemple une couleur ou un numéro. Pour chaque empreinte 100, 100' et suivantes, des documents plus complets correspondant au document 134 et/ou à l'entretoise 120 d'identification peuvent être conservés dans le bac 8. Ces documents portent alors le même référencement ou le même moyen d'identification que celui de l'entretoise 120 bloquant l'empreinte 100, 100' ou suivante.

Le compartiment 4 comporte de préférence un revêtement en mousse disposé dans l'espace de transport 20, notamment contre la paroi inférieure 21 du corps 2. En complément, un revêtement en mousse peut être prévu sur les parois 22 et/ou 24. A titre d'exemple, le ou les revêtements non représentés dans un but de simplification peuvent présenter une épaisseur de l'ordre de 10 mm. Dans le compartiment 4 sont prévus des organes 44 d'accrochage de lanières souples 45. Ces lanières 45 peuvent être fixées aux organes 44 par des vis filetées 46 pénétrant dans un insert taraudé disposé dans les organes 44. Plus précisément, deux organes 44 sont prévus dans chacun des compartiments 41 et 42, de sorte que deux lanières 45 s'étendent transversalement dans le compartiment 4. Ces lanières 45 peuvent être utilisées pour maintenir des objets en position au fond de la boite 1, contre la paroi 21, lors de leur transport. Ces objets sont par exemple des prothèses réalisées à partir des empreintes 100 ou 100', ou bien un articulateur dentaire. En variante, le compartiment 4 peut comporter une unique lanière 45 ou plus de deux lanières 45. Selon une autre variante, la boite 1 peut comporter des moyens de déplacement des organes 44 de manière à pouvoir régler la position des lanières 45 dans le compartiment 4.

La paroi amovible 7 peut être positionnée dans deux organes de maintien 71 et 72 solidaires de la paroi inférieure 21 du corps 2, respectivement disposés vers la paroi 6 et vers la paroi 24. La paroi 7 peut être retirée par simple traction et rotation intuitives vers le haut et insérée dans les organes 71 et 72 par simple pression vers le bas. La paroi 7 peut comporter une ouverture supérieure 73 qui s'étend sur une distance plus ou moins importante suivant la direction longitudinale de la paroi 7. La paroi 7 peut également comporter une ouverture inférieure 74 prévue pour le passage des lanières 45. La paroi 7 peut également comporter, sur ses côtés délimitant les compartiments 41 et 42, des organes en mousse prévus pour amortir d'éventuels chocs avec les porte-empreintes 110 et 110' mobiles selon un mouvement pendulaire lors du transport. La paroi 7 peut comporter un orifice circulaire 75, représenté en pointillés à la figure 4, facilitant sa préhension en vue de sa dépose contre l'une des parois 22.

Le bac 8 délimite un espace intérieur de rangement 80, prévu pour recevoir des entretoises 120 inutilisées, des documents, des courriers, des éléments prothétiques de faible volume, etc... Le bac 8 comporte un fond ou paroi inférieure 81, deux parois latérales longitudinales 82, ainsi que deux parois latérales transversales 83 et 84. Les parois 81, 82, 83 et 84 délimitent l'espace 80. Les parois longitudinales 82 présentent des dimensions inférieures aux parois transversales 83 et 84. Le bac 8 peut être retourné dans le compartiment 5, autrement dit les parois 83 et 84 peuvent être positionnées sélectivement devant la paroi 23 transparente ou translucide du corps 2. Chacune des parois 83 et 84 comprend des moyens de repérage distincts de l'autre paroi 83 ou 84, par exemple des couleurs distinctes. A titre d'exemple non limitatif, la paroi 83 est rouge, tandis que la paroi 84 est verte.

Un exemple d'utilisation de la boite 1 est détaillé ci-après.

La boite 1 présente une première configuration de transport depuis le cabinet du chirurgien-dentiste vers le laboratoire du prothésiste. La paroi amovible 7 est centrée dans le compartiment 4. Les tiges 12 supportent un ou plusieurs porte-empreintes 110 et 110', supportant chacun son empreinte 100 ou 100'. Les entretoises 120 séparent les porte-empreintes 110 et 110'. Les tiges 12 sont clipsées dans les organes 16, de sorte que les porte-empreintes 110 et 110' sont situés sensiblement au centre du compartiment 41 ou 42 suivant la direction transversale de la boite 1.

Un coursier s'apprête à prendre la boite 1 dans la boite aux lettres du cabinet dentaire. Le bac 8 montre sa paroi verte 84 au niveau de la paroi 23 du corps 2. Le coursier a le droit de prendre la boite 1 et de la livrer au laboratoire de prothèses. Une fois que le prothésiste a effectué les travaux requis et déposé ceux-ci dans la boite 1, il retourne le bac 8 de manière à montrer la paroi rouge 83 au niveau de la paroi 23 du corps 2. Le coursier dépose la boite 1 dans la boite aux lettres du cabinet dentaire, paroi rouge 83 visible. Le chirurgien-dentiste voyant la couleur rouge, peut retirer la boite 1 de la boite aux lettres afin d'y retirer les travaux de prothèse effectués. A son tour il va déposer des empreintes 100 et 100' et accrocher les porte-empreintes 110 et 110' sur les tringles 12. Il retourne le bac 8 de manière à montrer la paroi verte 84 et repose la boite 1 dans la boite aux lettres. Le coursier voyant la couleur verte affichée, saura que le chirurgien-dentiste a géré le contenu de la boite 1. Le coursier devra prendre la boite 1 afin de la livrer au laboratoire.

La boite 1 présente une seconde configuration de transport depuis le laboratoire du prothésiste vers le cabinet du chirurgien-dentiste, distincte de la première configuration. Les porte-empreintes 110 et 110' sont vides et nettoyés. Les tiges 12 sont clipsées dans les organes 17, sur les côtés du compartiment 4. La paroi 7 est retirée de l'espace central du compartiment, par exemple disposée entre l'une des parois 22 et la tige 12. Les prothèses et les modèles réalisés par le laboratoire, de préférence enveloppés, sont disposés au fond du compartiment 4 et maintenus par les lanières 45.

En variante, les modèles peuvent être montés sur des articulateurs. L'ensemble comprenant un articulateur et une prothèse, finie ou en cours d'essayage, est fragile. Aussi est-il prévu de positionner la face postérieure de l'articulateur contre la paroi 6, à égale distance des parois 22 dans l'espace 20. Les lanières 45 permettent alors d'immobiliser l'ensemble en se croisant par dessus l'articulateur pour le maintenir plaqué contre la mousse recouvrant la paroi 21.

Par ailleurs, la boite 1 peut être conformée différemment des figures 1 à 6 sans sortir du cadre de l'invention.

En variante non représentée, le corps 2 et le couvercle 3 peuvent être solidarisés de manière amovible par tout moyen adapté. Par exemple, un système de fermeture à glissière peut être prévu entre le corps 2 et le couvercle 3.

Selon une autre variante non représentée, le système de tringlerie 10 peut comporter une unique tige 12.

Selon une autre variante non représentée, le système de tringlerie 10 peut comporter plus de deux tiges 12. Dans ce cas, le compartiment 4 peut comporter plusieurs parois amovibles 7.

Selon une autre variante non représentée, l'espace de transport 20 peut comporter des éléments gonflables disposés contre les parois 21, 22 et/ou 24 du corps 2, de manière à amortir d'éventuels chocs avec les porte-empreintes 110, 110' et les modèles.

En outre, les caractéristiques techniques des différents modes de réalisation et variantes mentionnées ci-dessus peuvent être, en totalité ou pour certaines d'entre elles, combinées entre elles. Ainsi, la boite 1 peut être adaptée en termes de coût et d'ergonomie.

## Revendications

1. Boite (1) de transport de dispositifs dentaires (100 ; 100'), tels que des empreintes, prothèses et modèles dentaires, cette boite de transport (1) comprenant :
- un corps (2) comprenant des parois (21, 22, 23, 24) délimitant un espace de transport (20) ; et
- un système de tringlerie (10) positionné dans le corps (2) et adapté pour recevoir au moins un support (110 ; 110') en suspension, le dispositif dentaire (100 ; 100') accroché à son support (110 ; 110') étant suspendu dans l'espace de transport (20), notamment sans contact avec les parois (21, 22, 23, 24) du corps (2) ;
**caractérisée en ce que** la boite de transport (1) comprend également au moins une entretoise de séparation (120) positionnée sur le système de tringlerie (10) et adaptée pour séparer deux supports (110 ; 110') voisins.

2. Boite de transport (1) selon la revendication 1, **caractérisée en ce qu'**elle comprend un bac (8) amovible positionné dans l'espace de transport (20), dans un compartiment (5) distinct du système de tringlerie (10).

3. Boite de transport (1) selon la revendication 2, **caractérisée en ce que** le bac (8) comprend deux parois latérales (83 ; 84) aptes à être positionnées sélectivement devant une paroi (23) transparente ou translucide du corps (2), chacune de ces parois latérales (83 ; 84) comprenant des moyens de repérage distincts de l'autre paroi latérale, par exemple des couleurs distinctes.

4. Boite de transport (1) selon l'une des revendications précédentes, **caractérisée en ce que** le système de tringlerie (10) comprend une tige fixe (11) et au moins une tige mobile (12) articulée sur la tige fixe (11), de préférence deux tiges mobiles (12) disposées de part et d'autre d'une paroi amovible (7) positionnée dans l'espace de transport (20).

5. Boite de transport (1) selon la revendication 4, **caractérisée en ce qu'**elle comprend au moins un organe de clipsage (16, 17) adapté pour recevoir une extrémité (14) de la tige mobile (12) opposée à l'extrémité (13) articulée sur la tige fixe (11), de préférence la boite de transport (1) comprend deux organes de clipsage (16, 17) pour chaque tige mobile (12) clipsable dans deux configurations distinctes.

6. Boite de transport (1) selon l'une des revendications précédentes, **caractérisée en ce que** la ou les entretoises de séparation (120) sont positionnées sur des tiges mobiles (12) appartenant au système de tringlerie (10).

7. Boite de transport (1) selon l'une des revendications précédentes, **caractérisée en ce qu'**elle comprend un couvercle (3) positionné sur le corps (2) pour la fermeture de l'espace de transport (20), le couvercle (3) et une paroi inférieure (21) du corps (2) comprenant de préférence des moyens (25; 31) de solidarisation de la boite de transport (1) avec une autre boite de transport (1) lors de leur empilement.

8. Boite de transport (1) selon l'une des revendications précédentes, **caractérisée en ce qu'**elle présente des dimensions adaptées pour être logée dans une boite aux lettres standard, présentant notamment une largeur de 260 mm, une hauteur de 260 mm et une profondeur de 340 mm.

9. Boite de transport (1) selon l'une des revendications précédentes, **caractérisée en ce qu'**elle comprend au moins une lanière (45) disposée au fond de l'espace de transport (20).

10. Boite de transport (1) selon l'une des revendications précédentes, **caractérisée en ce qu'**elle comprend au moins un organe amortisseur logé dans le corps (2) et/ou dans le couvercle (3), de préférence au moins contre la paroi inférieure (21) du corps (2), par exemple un revêtement en mousse ou un élément gonflable.

## Patentansprüche

1. Transportbehälter (1) für zahnärztliche Vorrichtungen (100; 100'), wie Abdrücke, Prothesen und Zahnmodelle, wobei dieser Transportbehälter (1) umfasst:
- einen Körper (2), der einen Transportraum (20) begrenzende Wände (21, 22, 23, 24) umfasst; und
- ein in dem Körper (2) positioniertes Gestängesystem (10), das angepasst ist, mindestens einen hängenden Träger (110; 110') aufzunehmen, wobei die zahnärztliche Vorrichtung (100; 100'), wenn sie an ihrem Träger (110; 110') befestigt ist, in dem Transportraum (20) aufgehängt ist, insbesondere ohne Kontakt mit den Wänden (21, 22, 23, 24) des Körpers (2);
**dadurch gekennzeichnet, dass** der Transportbehälter gleichfalls mindestens einen Trennungsabstandshalter (120) umfasst, der an dem Gestängesystem (10) positioniert ist und geeignet ist, zwei benachbarte Träger (110; 110') zu trennen.

2. Transportbehälter (1) nach Anspruch 1, **dadurch gekennzeichnet, dass** er eine Wanne (8) umfasst, die lösbar in dem Transportraum (20) in einem vom Gestängesystem (10) getrennten Fach positioniert ist.

3. Transportbehälter (1) nach Anspruch 2, **dadurch gekennzeichnet, dass** die Wanne (8) zwei Seitenwände (83; 84) umfasst, die geeignet sind, selektiv vor einer transparenten oder transluziden Wand (23) des Körpers (2) positioniert zu werden, wobei jede dieser Seitenwände (83; 84) Markierungsmittel umfasst, die sich von der anderen Seitenwand, beispielsweise durch unterschiedliche Farben, unterscheiden.

4. Transportbehälter (1) nach einem der vorhergehenden Ansprüche, **dadurch gekennzeichnet, dass** das Gestängesystem (10) eine feststehende Stange (11) und mindestens eine an der feststehenden Stange (11) angelenkte bewegliche Stange (12), vorzugsweise zwei beweglichen Stangen (12), umfasst, die beidseitig einer in dem Transportraum (20) positionierten abnehmbaren Wand (7) angeordnet sind.

5. Transportbehälter (1) nach Anspruch 4, **dadurch gekennzeichnet, dass** er mindestens ein Klipselement (16, 17) umfasst, das angepasst ist, ein Ende (14) der beweglichen Stange (12) aufzunehmen, das dem an der feststehenden Stange (11) angelenkten Ende (13) entgegengesetzt ist, vorzugsweise umfasst der Transportbehälter (1) zwei Klipselemente (16, 17) für jede bewegliche Stange (12), die in zwei unterschiedlichen Konfigurationen verklipst werden können.

6. Transportbehälter (1) nach einem der vorhergehenden Ansprüche, **dadurch gekennzeichnet, dass** der oder die Trennungsabstandshalter (120) an den beweglichen Stangen (12), die zu dem Gestängesystem (10) gehören, positioniert sind.

7. Transportbehälter (1) nach einem der vorhergehenden Ansprüche, **dadurch gekennzeichnet, dass** er einen auf dem Körper (2) positionierten Deckel (3) zum Abschließen des Transportraums (20) umfasst, wobei der Deckel (3) und eine Innenwand (21) des Körpers (2) vorzugsweise Mittel (25; 31) zur Verbindung des Transportbehälters (1) mit einem anderen Transportbehälter (1) bei ihrer Stapelung umfassen.

8. Transportbehälter (1) nach einem der vorhergehenden Ansprüche, **dadurch gekennzeichnet, dass** er Abmessungen aufweist, die angepasst sind, in einem Standardpostfach gelagert zu werden, das insbesondere eine Breite von 260 mm, eine Höhe von 260 mm und eine Tiefe von 340 mm aufweist.

9. Transportbehälter (1) nach einem der vorhergehenden Ansprüche, **dadurch gekennzeichnet, dass** er mindestens einen Riemen (45) umfasst, der am Boden des Transportraums (20) angeordnet ist.

10. Transportbehälter (1) nach einem der vorhergehenden Ansprüche, **dadurch gekennzeichnet, dass** er mindestens ein Dämpfungselement umfasst, das in dem Körper (2) und/oder in dem Deckel (3), vorzugsweise mindestens an der unteren Wand (21) des Körpers (2), angeordnet ist, beispielsweise eine Schaumauflage oder ein aufblasbares Element.

## Claims

1. Transportation box (1) for dental devices (100; 100') such as dental impressions, prostheses and models, this transportation box (1) comprising:
- a body (2) comprising walls (21, 22, 23, 24) delimiting a transportation space (20); and
- a rod-based system (10) located in the body (2) and arranged to receive at least one hanging support (110; 110'), the dental device (100; 100') attached to its support (110; 110') being suspended in the transportation space (20), especially without contacting the walls (21, 22, 23, 24) of the body (2);
**characterised in that** the transportation box (1) also comprises at least one separation spacer (120) located on the rod-based system (10) and arranged to separate two neighbouring supports (110; 110').

2. Transportation box (1) according to claim 1, **characterised in that** it comprises a removable container (8) located in the transportation space (20), in a separate compartment (5) from the rod-based system (10).

3. Transportation box (1) according to claim 2, **characterised in that** the container (8) comprises two side walls (83; 84) arranged to be selectively positioned in front of a transparent or translucent wall (23) of the body (2), each of those side walls (83; 84) comprising identifying means which differ from the other side wall, for example different colours.

4. Transportation box (1) according to one of the preceding claims, **characterised in that** the rod-based system (10) comprises a fixed rod (11) and at least one movable rod (12) in articulated connection with the fixed rod (11), preferably two movable rods (12) arranged on each side of a removable wall (7) located in the transportation space (20).

5. Transportation box (1) according to claim 4, **characterised in that** it comprises at least one snap-fit element (16, 17) arranged to receive an end (14) of the movable rod (12) opposite the end (13) in articulated connection with the fixed rod (11), the transportation box (1) preferably comprising two snap-fit elements (16, 17) for each movable rod (12) allowing snap-fitting in two different configurations.

6. Transportation box (1) according to one of the preceding claims, **characterised in that** the separation spacer(s) (120) is/are located on movable rods (12) belonging to the rod-based system (10).

7. Transportation box (1) according to one of the preceding claims, **characterised in that** it comprises a cover (3) located on the body (2) for closing the transportation space (20), the cover (3) and a bottom wall (21) of the body (2) preferably comprising means (25; 31) for fixing the transportation box (1) to another transportation box (1) when they are stacked together.

8. Transportation box (1) according to one of the preceding claims, **characterised in that** it has dimensions suitable for placing in a standard mail delivery box, especially having a width of 260 mm, a height of 260 mm and a depth of 340 mm.

9. Transportation box (1) according to one of the preceding claims, **characterised in that** it comprises at least one strap arranged at the bottom of the transportation space (20).

10. Transportation box (1) according to one of the preceding claims, **characterised in that** it comprises at least one shock-absorbing element placed in the body (2) and/or in the cover (3), preferably at least against the bottom wall (21) of the body (2), for example a foam lining or an inflatable element.
